# EUROPEAN PATENT APPLICATION

(11) **EP 4 764 810 A1**
(43) Date of publication of application: **24.06.2026**
(21) Application number: 24887582.5
(22) Date of filing: 28.08.2024
(51) Int. Cl.: G06F 3/06

(54) **DATA PROCESSING METHOD AND APPARATUS, COMPUTER DEVICE, AND COMPUTER READABLE STORAGE MEDIUM**

(30) Priority: 07.11.2023 CN 202311466074
(71) Applicant: Tencent Technology (Shenzhen) Company Limited, Shenzhen, Guangdong 518057 (CN)
(72) Inventor: SUN, Chao, Shenzhen, Guangdong 518057 (CN)
(74) Representative: Gunzelmann, Rainer
(86) International application number: PCT/CN2024/115025
(87) International publication number: WO 2025/097963

(57) **Abstract**

A data processing method, comprising: upon receipt of a data read request of a service terminal, determining a current data operation state of a slave storage node, wherein the data operation state comprises a read-only state and a read-write state (step S202); determining a reference log index of a master storage node on the basis of the data operation state, wherein the reference log index is a log index most recently stored in the master storage node in the read-write state, and the master storage node and the slave storage node are in the same data operation state (step S204); obtaining a synchronized log index stored in the slave storage node, wherein the synchronized log index is obtained by synchronizing a log index stored in the master storage node (step S206); when the synchronized log index covers the reference log index, locally obtaining from the slave storage node target data requested by the data read request (step S208); and feeding back service data to the service terminal (step S210).

## Description

### RELATED APPLICATION

This application claims priority to Chinese Patent Application No. 202311466074X, entitled "DATA PROCESSING METHOD AND APPARATUS, COMPUTER DEVICE, AND COMPUTER-READABLE STORAGE MEDIUM" and filed on November 7, 2023, which is incorporated herein by reference in its entirety.

### FIELD OF THE TECHNOLOGY

The present disclosure relates to the technical field of computers, and in particular, to a data processing method and apparatus, a computer device, a storage medium, and a computer program product.

### BACKGROUND OF THE DISCLOSURE

With the development of computer technologies, a distributed storage technology has emerged. Through the distributed storage technology, a plurality of copies of the same data may be generated and stored at different node locations within a distributed system. When one piece of data is lost or damaged, correct data may be acquired from the copies stored in other nodes.

In the distributed storage technology, a plurality of nodes are usually divided into leader and follower nodes, and all data read requests and data write requests need to access the leader node to ensure data consistency among nodes. When receiving a user request, the follower node also needs to forward the user request to the leader node for processing. It can be learned that the overall capability of the distributed system is limited by the processing capacity of the leader node, and the follower nodes cannot independently process the user request, resulting in low efficiency in processing the user request.

### SUMMARY

According to various embodiments provided in the present disclosure, a data processing method and apparatus, a computer device, a computer-readable storage medium, and a computer program product are provided.

The present disclosure provides a data processing method, which is applied to a follower storage node of a computer device, and includes:
determining a current data operation state of the follower storage node when receiving a data read request of a business terminal, the data operation state including a readonly (RO) state and a read-write (RW) state;
determining a reference log index of a leader storage node according to the data operation state, the reference log index being a recently stored log index when the leader storage node is in the RW state, and the leader storage node and the follower storage node being in a same data operation state;
acquiring a synchronized log index stored in the follower storage node, the synchronized log index being obtained by synchronizing a log index stored in the leader storage node;
locally acquiring business data requested by the data read request from the follower storage node when the synchronized log index covers the reference log index; and
feeding back the business data to the business terminal.

The present disclosure further provides a data processing apparatus, which is applied to a follower storage node, and includes:
a read request receiving module, configured to determine a current data operation state of the follower storage node when receiving a data read request of a business terminal, the data operation state including an RO state and an RW state;
a determining module, configured to determine a reference log index of a leader storage node according to the data operation state, the reference log index being a recently stored log index when the leader storage node is in the RW state, and the leader storage node and the follower storage node being in a same data operation state;
an index acquisition module, configured to acquire a synchronized log index stored in the follower storage node, the synchronized log index being obtained by synchronizing a log index stored in the leader storage node;
a data acquisition module, configured to locally acquire business data requested by the data read request from the follower storage node when the synchronized log index covers the reference log index; and
a feedback module, configured to feed back the business data to the business terminal.

The present disclosure further provides a computer device, including a memory and a processor. The memory has a computer program stored therein, and the processor, when executing the computer program, performs operations in the method embodiments of the present disclosure.

The present disclosure further provides a computer-readable storage medium, having a computer program stored therein. The computer program, when executed by a processor, performs operations in the method embodiments of the present disclosure.

The present disclosure further provides a computer program product, including a computer program which, when executed by a processor, performs operations in the method embodiments of the present disclosure.

The present disclosure provides a data processing method, which is applied to a leader storage node of a computer device, and includes:
acquiring a reference log index of the leader storage node when the leader storage node in an RO state receives a data write request of a business terminal, the reference log index being a recently stored log index when the leader storage node is in an RW state;
generating a state change request including the reference log index, and transmitting the state change request to a follower storage node;
changing from the RO state to the RW state based on a response result fed back by the follower storage node for the state change request;
writing business data indicated by the data write request, and generating a log index of the business data; and
synchronizing the business data and the log index to the follower storage node.

The present disclosure further provides a data processing apparatus, including:
a write request receiving module, configured to acquire a reference log index of the leader storage node when the leader storage node in an RO state receives a data write request of a business terminal, the reference log index being a recently stored log index when the leader storage node is in an RW state;
a transmitting module, configured to generate a state change request including the reference log index, and transmit the state change request to a follower storage node;
a change module, configured to change from the RO state to the RW state based on a response result fed back by the follower storage node for the state change request;
a storage module, configured to write business data indicated by the data write request, and generate a log index of the business data; and
a synchronization module, configured to synchronize the business data and the log index to the follower storage node.

The present disclosure further provides a computer device, including a memory and a processor. The memory has a computer program stored therein, and the processor, when executing the computer program, performs operations in the method embodiments of the present disclosure.

The present disclosure further provides a computer-readable storage medium, having a computer program stored therein. The computer program, when executed by a processor, performs operations in the method embodiments of the present disclosure.

The present disclosure further provides a computer program product, including a computer program which, when executed by a processor, performs operations in the method embodiments of the present disclosure.

Details of one or more embodiments of the present disclosure are set forth in the accompanying drawings and descriptions below. Other features and advantages of the present disclosure will be apparent from the specification, accompanying drawings, and claims.

### BRIEF DESCRIPTION OF THE DRAWINGS

To more clearly illustrate the technical solutions in the embodiments of the present disclosure or in the related art, the drawings required in the descriptions of the embodiments or the related art will be briefly introduced below. It is clear that the drawings described below are only embodiments of the present disclosure, and a person skilled in the art may obtain other drawings according to the disclosed drawings without involving any creative effort.
FIG. 1 is a diagram of an application environment of a data processing method according to an embodiment.
FIG. 2 is a schematic flowchart of a data processing method according to an embodiment.
FIG. 3 is a sequence diagram of processing a data read request by a follower storage node according to an embodiment.
FIG. 4 is a sequence diagram of changing from an RW permission state to an RO permission state according to an embodiment.
FIG. 5 is a schematic flowchart of receiving a state change request transmitted by a leader storage node in an RO permission state according to an embodiment.
FIG. 6 is a sequence diagram of changing from an RO permission state to an RW permission state according to an embodiment.
FIG. 7 is a schematic flowchart of a data processing method according to another embodiment.
FIG. 8 is a sequence diagram of processing a data write request by a leader storage node according to an embodiment.
FIG. 9 is a schematic flowchart of delivering a state change instruction to a follower storage node according to an embodiment.
FIG. 10 is a schematic diagram of an architecture in which a data processing method is applied to a distributed storage scene according to an embodiment.
FIG. 11 is a schematic diagram of rules that copies of a server need to follow according to an embodiment.
FIG. 12 is a schematic diagram of related parameters and processing of a synchronous-state remote procedure call (SyncState RPC) of a leader and a follower according to an embodiment.
FIG. 13 is a structural block diagram of a data processing apparatus according to an embodiment.
FIG. 14 is a structural block diagram of a data processing apparatus according to another embodiment.
FIG. 15 is a diagram of an internal structure of a computer device according to an embodiment.

### DESCRIPTION OF EMBODIMENTS

The technical solutions in the embodiments of the present disclosure will be clearly and completely described below with reference to the accompanying drawings in the embodiments of the present disclosure. It is clear that the described embodiments are merely some rather than all of the embodiments of the present disclosure. All other embodiments obtained by a person skilled in the art based on the embodiments of the present disclosure without making creative efforts fall within the protection scope of the present disclosure.

Data related to a data processing method provided in the embodiments of the present disclosure may be data in a big data warehouse. Big data refers to a data set that cannot be captured, managed, and processed using conventional software tools within a specific time range. It is a massive, high-growth, and diverse information asset that needs a new processing mode to have stronger decision-making power, insight and discovery capabilities, and process optimization capabilities. With the advent of the cloud era, big data has attracted increasing attention. Big data needs special technologies to effectively process substantial data within a tolerable elapsed time. Technologies applicable to big data include a massively parallel processing database, data mining, a distributed file system, a distributed database, a cloud computing platform, the Internet, and an extensible storage system.

A database may be briefly considered as an electronic file cabinet-a place for storing electronic files. A user may perform operations such as adding, querying, updating, and deleting on data in the files. The so-called "database" is a data set that is stored together in a specific manner, may be shared with a plurality of users, has as little redundancy as possible, and is independent of the application program.

A database management system (DBMS) is a computer software system designed for managing a database, and generally has basic functions such as storage, interception, security guarantee, and backup. The DBMS may perform classification according to supported database models, such as a relational or extensible markup language (XML); according to supported computer types, such as a server cluster or a mobile phone; according to used query languages such as structured query language (SQL) or XQuery; according to performance impulse focuses, such as a maximum scale or a highest running speed; or according to other classification manners. Regardless of which classification manner is used, some DBMSs may span categories, for example, simultaneously supporting multiple query languages.

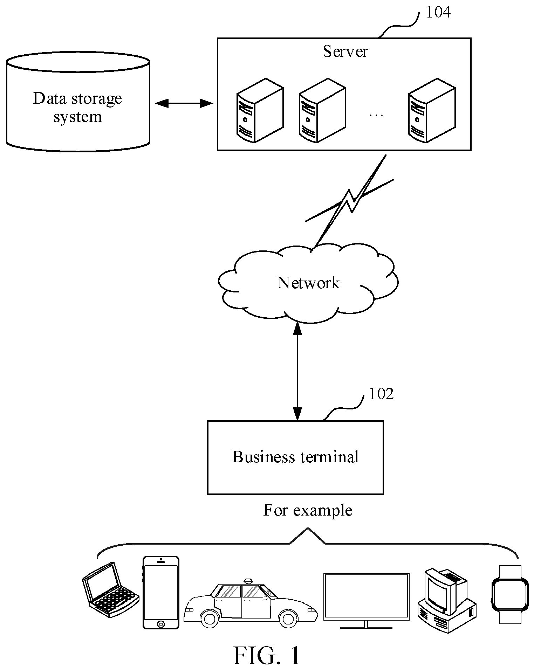

The data processing method provided in the embodiments of the present disclosure may be applied to an application environment shown in FIG. 1. A business terminal 102 communicates with a server 104 through a network. A data storage system may store data that needs to be processed by the server 104. The data storage system may be integrated on the server 104, or may be placed on the cloud or another server. The business terminal 102 may have a leader storage node and at least one follower storage node, and the server 104 may also have a leader storage node and at least one follower storage node. Both the business terminal 102 and the server 104 may individually perform the data processing method provided in the embodiments of the present disclosure. The business terminal 102 and the server 104 may further be cooperatively configured to perform the data processing method provided in the embodiments of the present disclosure. When the business terminal 102 and the server 104 are cooperatively configured to perform the data processing method provided in the embodiments of the present disclosure, the business terminal 102 transmits a data read request to a follower storage node of the server 104. When the follower storage node of the server 104 receives the data read request of the business terminal, a current data operation state of the follower storage node is determined. The data operation state includes an RO state and an RW state. The follower storage node of the server 104 determines a reference log index of the leader storage node according to the data operation state. The reference log index is a recently stored log index when the leader storage node is in the RW state, and the leader storage node and the follower storage node are in a same data operation state. The follower storage node of the server 104 acquires a synchronized log index stored in the follower storage node. The synchronized log index is obtained by synchronizing a log index stored in the leader storage node. When the synchronized log index covers the reference log index, the follower storage node of the server 104 locally acquires business data requested by the data read request, and feeds back the business data to the business terminal 102.

The business terminal 102 may be, but is not limited to, a desktop computer, a notebook computer, a smartphone, a tablet computer, an intelligent voice interactive device, an intelligent appliance, an in-vehicle terminal, an aircraft, or the like. An application program may run on the business terminal 102, and the application program may be a communication application, an audio/video application, an image processing application, or the like. The server 104 may be an independent physical server, may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform.

In this embodiment, the data processing method is applied to the leader storage node of the server 104. When the business terminal 102 and the server 104 are cooperatively configured to perform the data processing method provided in this embodiment of the present disclosure, the business terminal 102 transmits a data write request to the leader storage node of the server 104. When the leader storage node in the RO state receives the data write request, the reference log index of the leader storage node is acquired. The reference log index is a recently stored log index when the leader storage node has an RW permission. The leader storage node of the server 104 generates a state change request including the reference log index, and transmits the state change request to the follower storage node. The leader storage node of the server 104 changes from the RO state to the RW state based on a response result fed back by the follower storage node for the state change request, writes the business data indicated by the data write request, and generates a log index of the business data. The leader storage node of the server 104 synchronizes the business data and the log index to the follower storage node.

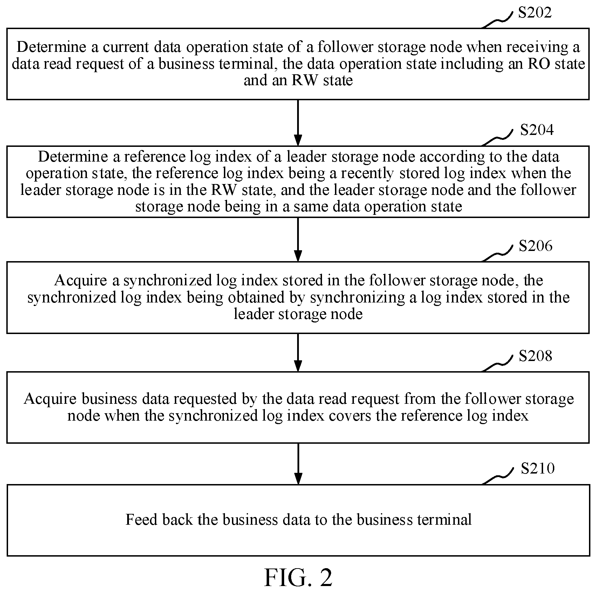

In an embodiment, as shown in FIG. 2, a data processing method is provided. An example in which the method is applied to a follower storage node of a computer device (the computer device may be the terminal or the server in FIG. 1) in FIG. 1 is used for description. The method includes the following operations.

Operation S202: Determine a current data operation state of the follower storage node when receiving a data read request of a business terminal, the data operation state including an RO state and an RW state.

The data read request refers to a request for reading data. The data read request may be a request initiated by the business terminal to the follower storage node for reading the business data.

The data operation refers to a particular operation that the follower storage node or a leader storage node can perform on the business data, and may specifically include an RW operation and an RO operation on the business data. The RW operation refers to a read operation and a write operation on the business data. The RO operation refers to a read operation on the business data.

The data operation state of the follower storage node refers to a mode in which the follower storage node can perform a particular operation on the business data. The data operation state includes the RO state and the RW state. The RO state represents having an RO permission. That is, only data reading is allowed. The RW state represents having an RW permission, that is, a data reading permission and a data writing permission. The data writing permission includes permissions for operations on data, such as adding, deleting, and changing.

In this embodiment, the computer device has a leader storage node and at least one follower storage node. The leader storage node is configured to store the business data and the log index of the business data. The follower storage node is configured to store the business data and the log index synchronized by the leader storage node.

The log index of the business data refers to a unique identifier assigned to the business data when the business data is stored to the leader storage node or the follower storage node. The leader storage node or the follower storage node may be searched for the business data through the log index of the business data.

When the user needs to read the business data, the data read request is transmitted to any follower storage node of the computer device through the business terminal.

When receiving the data read request, the follower storage node of the computer device determines the current data operation state of the follower storage node. The data operation state includes the RO state and the RW state. When the follower storage node is in the RO state, the follower storage node currently has the RO permission and may perform the read operation. When the follower storage node is in the RW state, the follower storage node currently has the RW permission and may perform the read operation and the write operation.

In this embodiment, the data operation state of the follower storage node is the same as the data operation state of the leader storage node. When the follower storage node is in the RO state, the leader storage node is also in the RO state. Thus, both the follower storage node and the leader storage node currently have the RO permission. When the follower storage node is in the RW state, the leader storage node is also in the RW state. Thus, both the follower storage node and the leader storage node currently have the RW permission.

In this embodiment, the current data operation state of the leader storage node may be determined by determining the current data operation state of the follower storage node, without acquiring the data operation state of the leader storage node from the leader storage node, thereby reducing interaction with the leader storage node.

Operation S204: Determine a reference log index of a leader storage node according to the data operation state, the reference log index being a recently stored log index when the leader storage node is in the RW state, and the leader storage node and the follower storage node being in a same data operation state.

The reference log index is the recently stored log index when the leader storage node is in the RW state, and is a latest stored log index when the leader storage node is in the RW state. When the data operation state is the RO state, the reference log index is a recently stored log index when the leader storage node changes from the RW state to the RO state, that is, a recently stored log index when the leader storage node is in the RW state before the RO state. The recently stored log index is the latest stored log index. For example, when the leader storage node is in the RW state, new business data is written, and a log index of the new business data is set to "3". Next, the leader storage node changes from the RW state to the RO state, and the log index "3" is the reference log index.

When the data operation state is the RW state, the reference log index is the recently stored log index when the leader storage node is in the RW state, and is the latest stored log index when the leader storage node is in the RW state. For example, the leader storage node is currently in the RW state. New business data is written to the leader storage node, and a log index of the business data is set to "3". In this case, the reference log index is "3". Next, new business data is written to the leader storage node, and a log index of the business data is set to "4". In this case, the log index "4" is used as the reference log index.

The leader storage node may locally store a plurality of stored log indexes, and each stored log index identifies business data written during a data write operation of one data write request in the leader storage node.

Specifically, the follower storage node determines the reference log index of the leader storage node according to the data operation state. The reference log index is the recently stored log index when the leader storage node is in the RW state.

In this embodiment, the follower storage node locally stores the reference log index of the leader storage node. When the data operation state is the RO state, the follower storage node is currently in the RO state, and the leader storage node and the follower storage node maintain the same data operation state. Thus, the leader storage node is also currently in the RO state. Therefore, the leader storage node does not write new business data and a log index. Therefore, the reference log index locally stored in the follower storage node is the latest log index in the leader storage node, and the follower storage node locally acquires the reference log index.

In this embodiment, when the data operation state is the RW state, the follower storage node is currently in the RW state, and the leader storage node is also currently in the RW state. New business data and a log index may be written, and the reference log index locally stored in the follower storage node may not be the latest log index of the leader storage node. The follower storage node needs to transmit an index acquisition request to the leader storage node in the RW state to acquire the latest log index. The follower storage node receives the reference log index fed back by the leader storage node based on the index acquisition request. The reference log index fed back is the latest log index currently stored in the leader storage node.

Operation S206: Acquire a synchronized log index stored in the follower storage node, the synchronized log index being obtained by synchronizing a log index stored in the leader storage node.

The synchronized log index is obtained by synchronizing the log index stored in the leader storage node. The synchronized log index may be the recent or latest log index of the follower storage node. For example, the synchronized log index is a recent or latest log index of business data synchronized from the leader storage node, and the business data is synchronized data.

In this embodiment, the leader storage node in the RW state has the RW permission. When receiving the data write request initiated by the business terminal, the leader storage node writes the business data indicated by the data write request into the leader storage node, generates a log index of the business data, and stores the log index in the leader storage node. Specifically, the business data may be locally written to the leader storage node, and the log index of the business data may be generated. The leader storage node synchronizes the business data and the log index to the follower storage node. The follower storage node performs a data synchronization operation. The business data and the log index are synchronized to the follower storage node, and synchronized data corresponding to the business data and a synchronized index corresponding to the log index are formed at the follower storage node. Specifically, the business data and the log index may be synchronized locally to the follower storage node.

When receiving the data read request initiated by the business terminal, the follower storage node may acquire the synchronized log index stored in the follower storage node.

Further, the follower storage node may acquire a recently stored synchronized log index. The recently stored synchronized log index is a latest log index obtained by synchronizing the log index stored in the leader storage node.

Operation S208: Acquire business data requested by the data read request from the follower storage node when the synchronized log index covers the reference log index.

In this embodiment, the synchronized log index in the follower storage node is compared with the reference log index of the leader storage node to determine whether a local synchronized log index can cover the reference log index. When the synchronized log index covers the reference log index, the follower storage node has synchronized the latest business data of the leader storage node locally. Thus, the follower storage node may directly acquire the business data requested by the data read request from synchronized data locally stored.

When the synchronized log index fails to cover the reference log index, the follower storage node has not synchronized the latest business data of the leader storage node locally. Thus, the follower storage node may enter a waiting state. After the synchronized log index covers the reference log index, the follower storage node may directly acquire the business requested by the data read request from the synchronized data locally stored.

In this embodiment, when the synchronized log index fails to cover the reference log index, the follower storage node may enter a waiting state, and detect in real time or periodically whether the local synchronized log index covers the reference log index, until the synchronized log index can cover the reference log index.

In this embodiment, when the synchronized log index fails to cover the reference log index, the data read request may be forwarded to the leader storage node, and the leader storage node processes the data read request. The leader storage node may directly acquire, locally from the leader storage node, the business data requested by the data read request and directly feed back the business data to the business terminal. The leader storage node may further feed back the business data to the follower storage nodes, and the follower storage node feeds back the business data to the business terminal.

In an embodiment, when the synchronized log index includes a plurality of log indexes, the reference log index includes a plurality of log indexes, and the synchronized log index covering the reference log index refers to the synchronized log index containing the reference log index. The synchronized log index failing to cover the reference log index refers to the synchronized log index not containing the reference log index. For example, if the synchronized log index includes 1 to 10, and the reference log index includes 1 to 10, the synchronized log index covers the reference log index. If the synchronized log index includes 1 to 8, and the reference log index includes 1 to 10, the synchronized log index does not cover the reference log index.

In an embodiment, the synchronized log index includes one log index, the reference log index includes one log index, and the synchronized log index covering the reference log index refers to the synchronized log index being greater than or equal to the reference log index. The synchronized log index failing to cover the reference log index refers to the synchronized log index being less than the reference log index. For example, the synchronized log index is 10, the reference log index is 10, and the synchronized log index is equal to the reference log index. Thus, the synchronized log index covers the reference log index. The synchronized log index is 8, the reference log index is 10, and 8 is less than 10. Thus, the synchronized log index does not cover the reference log index.

Operation S210: Feed back the business data to the business terminal.

In this embodiment, the follower storage node of the computer device feeds back the business data to the business terminal transmitting the data read request.

In this embodiment, the computer device has a leader storage node and at least one follower storage node. The leader storage node and each follower storage node may independently process the data read request. When the business terminal initiates the data read request to the leader storage node, the leader storage node may directly acquire, locally from the leader storage node, the business data requested by the data read request.

When initiating the data read request to the follower storage node, the business terminal may acquire the business data and feed back the business data according to the processing of operation S202 to operation S210.

In the foregoing data processing method, when receiving the data read request, the follower storage node determines the current data operation state of the follower storage node to determine whether the follower storage node is in the RO state or the RW state. Since the leader storage node and the follower storage node are in the same data operation state, the follower storage nodes may directly determine the data operation state of the leader storage node according to the data operation state of the follower storage nodes to avoid interaction with the leader storage node. The reference log index is the recently and latest stored log index when the leader storage node is in the RW state. The follower storage node directly determines the reference log index of the leader storage node according to the data operation state of the follower storage node, thereby accurately determining whether data consistency with the leader storage node can be satisfied when the follower storage node executes the data read request. The synchronized log index stored in the follower storage node is acquired. The synchronized log index is obtained by synchronizing the log index stored in the leader storage node. When the synchronized log index covers the reference log index, the follower storage node has synchronized the latest business data of the leader storage node locally. Thus, the follower storage node satisfies data consistency, and a case in which old data is fed back for the data read request when data of the follower storage node and data of the leader storage node are not synchronized can be effectively avoided. When the data is consistent, the business data requested by the data read request is locally acquired from the follower storage node and fed back to the business terminal so that the follower storage nodes can independently process the data read request initiated by the user without depending on the leader storage node for processing, thereby greatly improving the flexibility and response efficiency of the follower storage node, and improving the efficiency in processing the data read request of the user.

In an embodiment, determining the reference log index of the leader storage node according to the data operation state includes:
locally acquiring a reference log index from the follower storage node when the follower storage node is in the RO state.

In this embodiment, the follower storage node locally stores the reference log index of the leader storage node. When the follower storage node determines that the current data operation state is the RO state, the follower storage node may determine that the leader storage node is also currently in the RO state, that is, the leader storage node does not write new business data and a log index currently. Therefore, if the reference log index locally stored in the follower storage node is the latest log index of the leader storage node, the follower storage node locally acquires the reference log index.

In this embodiment, when the data operation state is the RO state, the leader storage node is also in the RO state. Thus, the reference log index of the leader storage node locally stored in the follower storage node is the latest, and the follower storage node may directly use the local reference log index without interacting with the leader storage node, so that the follower storage node may independently process the data read request, thereby improving the flexibility of data processing of the follower storage node.

In an embodiment, determining the reference log index of the leader storage node according to the data operation state includes:
transmitting, when the follower storage node is in the RW state, an index acquisition request to the leader storage node in the RW state; and receiving the reference log index fed back by the leader storage node based on the index acquisition request.

When determining that the current data operation state is the RW state, the follower storage node may determine that the leader storage node is also currently in the RW state, that is, the leader storage node may currently write new business data and a log index. Therefore, the reference log index locally stored in the follower storage node may not be the latest log index of the leader storage node. Therefore, the follower storage node transmits the index acquisition request to the leader storage node in the RW state, and waits for the leader storage node to return the latest log index as the reference log index. The leader storage node receives the index acquisition request, uses a latest log index stored when receiving the index acquisition request as the reference log index, and feeds back the reference log index to the follower storage node. The follower storage node receives the reference log index fed back by the leader storage node based on the index acquisition request and updates the local reference log index.

In this embodiment, when the data operation state is the RW state, the leader storage node is also in the RW state, that is, the leader storage node may have a new log index in this case. Therefore, the local reference log index of the follower storage node is not the latest log index of the leader storage node. Thus, the index acquisition request is transmitted to the leader storage node in the RW state to accurately acquire the current latest reference log index of the leader storage node. In addition, the follower storage node may accurately determine, according to the data operation state of the follower storage node, whether linear consistency can be satisfied when the follower storage node executes the data read request, so that the follower storage node processes the data read request when the linear consistency is satisfied, thereby effectively avoiding a case in which old data is fed back for the data read request when data of the follower storage node and data of the leader storage node are not synchronized.

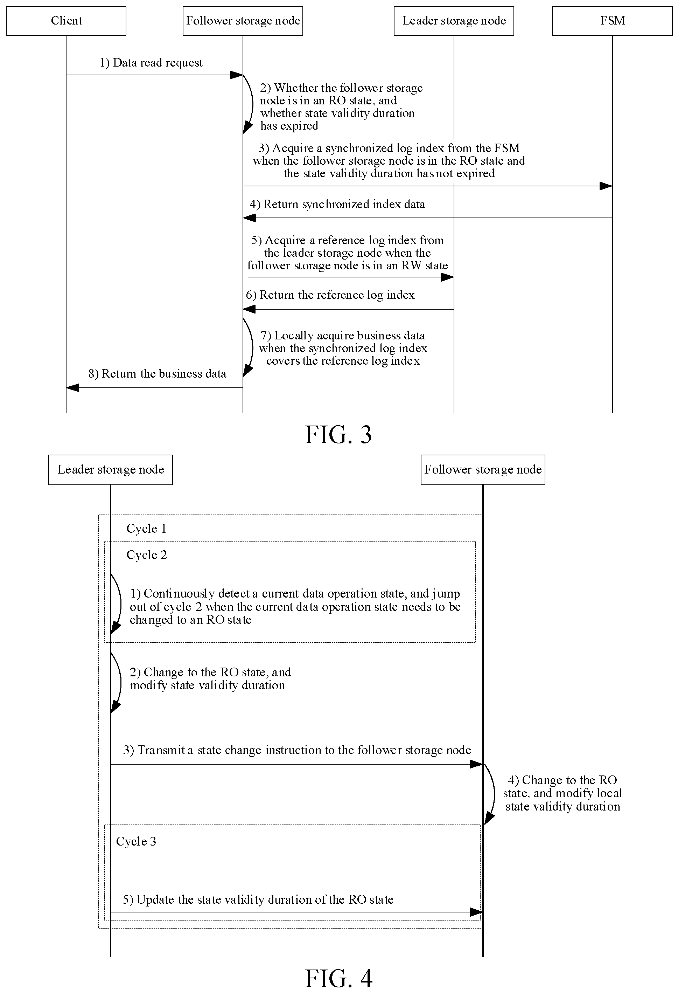

FIG. 3 is a sequence diagram of processing a data read request by a follower storage node according to an embodiment.
1) A user transmits the data read request to any follower storage node through a client running on a business terminal.
2) The follower storage node receives the data read request, detects whether the follower storage node is currently in an RO state, and detects whether current state validity duration has expired.
3) When the follower storage node is currently in the RO state, and the state validity duration corresponding to the RO state has not expired, the follower storage node acquires a synchronized log index from a finite state machine (FSM) of the follower storage node.
4) The FSM returns the synchronized log index to the follower storage node.
5) When the follower storage node is currently in the RW state, the follower storage node transmits an index acquisition request to the leader storage node.
6) The leader storage node returns a recent reference log index.
7) When the synchronized log index covers the reference log index, the follower storage node locally acquires business data requested by the data read request. When the synchronized log index does not cover the reference log index, the follower storage node locally acquires the business data requested by the data read request from the follower storage node after waiting for the synchronized log index in the FSM to cover the reference log index.
8) The follower storage node feeds back the business data to the client.

In this embodiment, the user initiates the data read request to the follower storage node. The follower storage node determines whether the follower storage node is currently in the RO state. If so, the follower storage node further determines whether the state validity duration of the RO state has expired. If the state validity duration of the RO state has not expired, the leader storage node is also currently in the RO state, and no new business data is written. Thus, the follower storage node locally acquires the latest synchronized log index and determines whether the synchronized log index covers the reference log index. If so, the follower storage node has locally synchronized the latest business data of the leader storage node. Then, the follower storage node locally acquires the business data requested by the data read request and feeds back the business data to the business terminal. The business data does not need to be forwarded to the leader storage node for processing so that the follower storage node can independently process the data read request, thereby greatly improving the processing performance of the follower storage node.

In an embodiment, the method further includes:
receiving a state change instruction transmitted by the leader storage node when the leader storage node changes from the RW state to the RO state, the state change instruction including the reference log index when the leader storage node changes to the RO state; changing from the RW state to the RO state according to the state change instruction; and updating the reference log index locally stored in the follower storage node for the leader storage node based on the reference log index in the state change instruction.

The state change instruction is configured for instructing the follower storage node to change from the RW state to the RO state. The state change instruction may further be configured for instructing the follower storage node to update the locally stored reference log index or update state validity duration locally and currently stored in the follower storage node. The state change instruction may include the reference log index when the leader storage node changes to the RO state.

Specifically, the leader storage node changes the leader storage node from the RW state to the RO state in response to a state change event. The leader storage node acquires the local reference log index. The reference log index is a recently stored log index when the leader storage node has the RW permission. The leader storage node generates the state change instruction including the reference log index and delivers the state change instruction to the follower storage node.

In this embodiment, generating the state change instruction including the reference log index includes: configuring the state validity duration corresponding to the RO state, the state validity duration being configured for constraining duration for which the leader storage node and the follower storage node are in the RO state; and generating the state change instruction including the reference log index and the state validity duration.

The follower storage node receives a state change instruction transmitted by the leader storage node when the leader storage node changes from the RW state to the RO state, and the state change instruction includes the reference log index when the leader storage node changes to the RO state.

The follower storage node changes from the RW state to the RO state according to the state change instruction and changes the reference log index of the leader storage node locally stored in the follower storage node to the reference log index in the state change instruction. The follower storage node generates a state change result and feeds back the state change result to the leader storage node.

In this embodiment, when the follower storage node does not locally store the reference log index of the leader storage node, the reference log index of the leader storage node is locally stored in the follower storage node. When the follower storage node locally stores the reference log index of the leader storage node, the reference log index of the leader storage node locally stored in the follower storage node is changed to the reference log index in the state change instruction.

In this embodiment, the state change instruction transmitted by the leader storage node when the leader storage node changes from the RW state to the RO state is received, to change from the RW state to the RO state according to the state change instruction, so that data operation states of the follower storage node and the leader storage node can be kept consistent. The state change instruction includes the reference log index when the leader storage node changes to the RO state, so that the follower storage node updates the reference log index of the leader storage node locally stored in the follower storage node based on the reference log index in the state change instruction, and the follower storage node can locally store the latest log index of the leader storage node, to reduce interaction with the leader storage node and improve a speed of responding to the data read request.

In an embodiment, the state change instruction further includes state validity duration corresponding to the RO state. The method further includes:
updating state validity duration locally and currently stored in the follower storage node to the state validity duration of the RO state in the state change instruction.

The state change instruction further includes the state validity duration of the RO state. The state validity duration of the RO state represents the time that the follower storage node is in the RO state. After the state validity duration is reached, the RO state becomes invalid. The state validity duration may include at least one of state effective time, state survival duration, or state invalidity time.

The state effective time represents when the follower storage node changes to the RO state. The state survival duration represents duration for which the follower storage node is in the RO state. The state invalidity time represents when the RO state of the follower storage node becomes invalid.

Specifically, the follower storage node locally stores the state validity duration corresponding to the current data operation state. The data operation state includes the RO state and the RW state, and then the state validity duration of the data operation state includes state validity duration of the RO state and state validity duration of the RW state.

When the current data operation state of the follower storage node is the RO state, the follower storage node locally stores the state validity duration of the RO state. When the current data operation state of the follower storage node is the RW state, the follower storage node locally stores the state validity duration of the RW state.

The follower storage node receives the state change instruction transmitted by the leader storage node when the leader storage node changes from the RW state to the RO state, and the state change instruction includes the reference log index when the leader storage node changes to the RO state, and the state validity duration of the RO state. If the follower storage node in the RW state locally stores the state validity duration of the RW state, the follower storage node updates the locally stored state validity duration of the RW state to the state validity duration of the RO state in the state change instruction.

In this embodiment, the state validity duration locally and currently stored in the follower storage node is updated to the state validity duration of the RO state in the state change instruction to set validity duration for each data operation state, so that the data operation state may be automatically valid or automatically invalid without frequent interaction with the leader storage node, thereby reducing dependency of the follower storage node on the leader storage node.

FIG. 4 is a sequence diagram of a leader storage node and a follower storage node changing from an RW state to an RO state according to an embodiment.
1) The leader storage node continuously detects a current data operation state, and if the current data operation state is the RW state and needs to be changed to the RO state, stops cyclically detecting the current data operation state.
2) The leader storage node changes from the RW state to the RO state and configures state validity duration of the RO state.
3) The leader storage node acquires a recent reference log index, generates a state change instruction including the reference log index and the state validity duration, and transmits the state change instruction to the follower storage node.
4) The follower storage node receives the state change instruction transmitted by the leader storage node, and changes from the RW state to the RO state according to the state change instruction; updates the reference log index in the state change instruction to a locally stored reference log index of the leader storage node; and updates state validity duration locally and currently stored in the follower storage node to the state validity duration of the RO state in the state change instruction.
5) When elapsed validity duration of the RO state is about to reach the state validity duration, the leader storage node delivers a state validity duration update instruction to notify the follower storage node to update the state validity duration corresponding to the follower storage node.

In this embodiment, the leader storage node continues its own data operation state. When the leader storage node needs to change from the RW state to the RO state, the leader storage node directly changes the state and configures the state validity duration of the RO state, to configure the duration for which the leader storage node is maintained in the RO state. After the state is changed, the state change instruction including the reference log index and the state validity duration is transmitted to the follower storage node to instruct the follower storage node to also change from the RW state to the RO state, so that the leader storage node and the follower storage node consistently maintain the same data operation state and the same duration. Meanwhile, the follower storage node updates the local reference log index to the latest reference log index of the leader storage node to synchronize the log index of the follower storage node and the log index of the leader storage node, thereby maintaining data consistency between the follower storage node and the leader storage node.

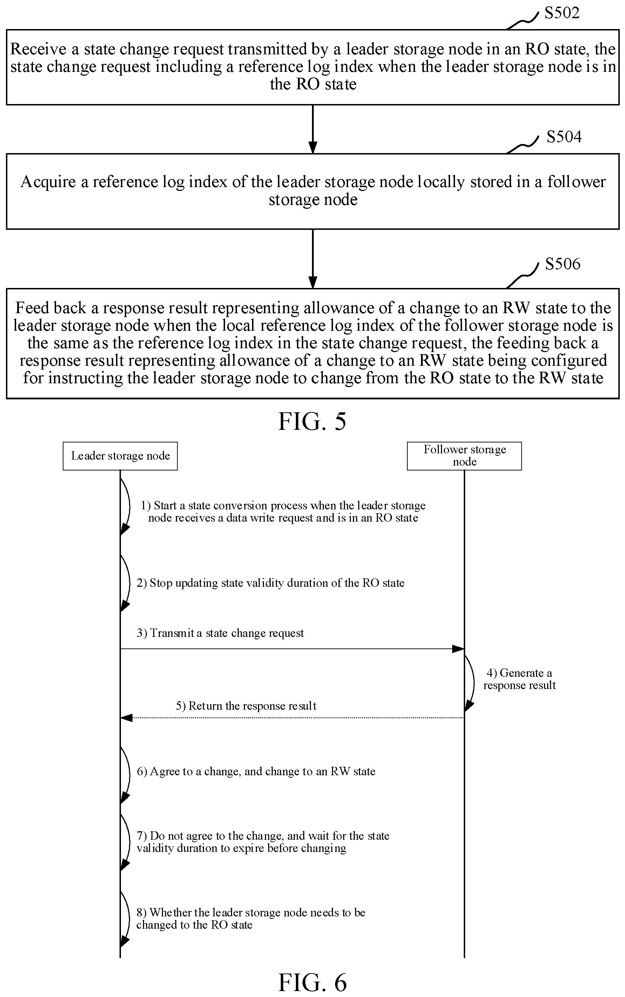

In an embodiment, as shown in FIG. 5, the method further includes the following operations.

Operation S502: Receive a state change request transmitted by the leader storage node in the RO state, the state change request including the reference log index when the leader storage node is in the RO state.

The state change request is used by the leader storage node to request the follower storage node to allow a change from the RO state to the RW state. The state change request includes the reference log index when the leader storage node is in the RO state.

Specifically, when the leader storage node in the RO state receives the data write request, the leader storage node acquires the reference log index of the leader storage node and generates the state change request including the reference log index. The leader storage node transmits the state change request to the follower storage node.

The follower storage node in the RO state receives the state change request transmitted by the leader storage node in the RO state, and parses the state change request to obtain the reference log index when the leader storage node is in the RO state.

Operation S504: Acquire the reference log index locally stored in the follower storage node for the leader storage node.

Specifically, the follower storage node acquires the locally stored reference log index for the leader storage node. The locally stored reference log index is carried in the state change instruction transmitted by the leader storage node when the leader storage node changes from the RW state to the RO state.

Operation S506: Feed back a response result representing allowance of a change to the RW state to the leader storage node when the local reference log index is the same as the reference log index in the state change request, the feeding back a response result representing allowance of a change to the RW state being configured for instructing the leader storage node to change from the RO state to the RW state.

The response result refers to a response of the follower storage node to the state change request. There are two types of response results. One type represents allowing to change from the RO state to the RW state, and the other type represents rejecting to change from the RO state to the RW state.

Specifically, the follower storage node compares the locally stored reference log index with the reference log index in the state change request. When the locally stored reference log index is the same as the reference log index in the state change request, the current data operation state of the follower storage node is consistent with a state that is requested to be changed in the state change request, that is, the current data operation state of the follower storage node is consistent with the data operation state of the leader storage node. That is, the state change request is valid. Then, the response result representing allowance of a change to the RW state is fed back to the leader storage node. Feeding back the response result representing allowance of a change to the RW state is configured for instructing the leader storage node to change from the RO state to the RW state.

The leader storage node changes from the RO state to the RW state based on the response result fed back by the follower storage node for the state change request. The leader storage node locally writes the business data indicated by the data write request and generates the log index of the business data. The leader storage node synchronizes the business data and the log index to the follower storage node.

In this embodiment, the state change request transmitted by the leader storage node in the RO state is received, and the transmitted state change request includes the reference log index when the leader storage node is in the RO state. The reference log index of the leader storage node locally stored in the follower storage node is acquired to determine whether the state change request is valid based on whether the local reference log index of the follower storage node is the same as the reference log index in the state change request, thereby feeding back the response result representing allowance of a change to the RW state to the leader storage node when the state change request is valid. Thus, state changes between the leader storage node and the follower storage nodes may be consistent, thereby facilitating data consistency.

In an embodiment, the method further includes:
receiving business data and a log index of the business data that are transmitted by the leader storage node in the RW state; and locally performing a data synchronization operation at the follower storage node according to the business data and the log index of the business data, to obtain the synchronized log index and synchronized data.

Specifically, after the leader storage node changes to the RW state, the leader storage node locally writes the business data indicated by the data write request into the leader storage node and generates the log index of the business data. The leader storage node associatively stores the business data and the log index of the business data locally in the leader storage node. The leader storage node generates a data synchronization instruction based on the business data and the log index. The data synchronization instruction includes the business data and the log index corresponding to the business data. The leader storage node transmits the data synchronization instruction to each follower storage node to synchronize the business data and the log index to the follower storage node.

The follower storage node receives the data synchronization instruction and parses out the business data and the log index. The follower storage node locally performs the data synchronization operation at the follower storage node according to the business data and the log index of the business data to associatively store the synchronized log index and the synchronized data locally. The synchronized log index is obtained by synchronizing the business data, and the synchronized log index is obtained by synchronizing the log index of the business data.

In this embodiment, the business data and the log index of the business data that are transmitted by the leader storage node in the RW state are received, and the data synchronization operation is locally performed at the follower storage node according to the business data and the log index of the business data, to obtain the synchronized log index and the synchronized data. Thus, new data written by the leader storage node can be synchronized in time, to ensure that when the user accesses the follower storage node subsequently, the follower storage node may independently process the data read request of the user without depending on the leader storage node, thereby improving the flexibility of the follower storage node.

In an embodiment, the method further includes:
feeding back a response result representing rejection of the change to the RW state to the leader storage node when the local reference log index of the follower storage node is different from the reference log index in the state change request, the response result representing rejection of the change to the RW state being configured for instructing the leader storage node to maintain the RO state.

Specifically, when the local reference log index of the follower storage node is different from the reference log index in the state change request, the current data operation state of the follower storage node is inconsistent with the state that is requested to be changed in the state change request, that is, the state change request is an expired invalid request. Then, the follower storage node generates the response result representing rejection of the change to the RW state, and feeds back the response result to the leader storage node. The response result representing rejection of the change to the RW state is configured for instructing the leader storage node to maintain the RO state, so that the leader storage node does not perform a state change after receiving the response result.

In this embodiment, whether the state change request is valid is determined based on whether the local reference log index of the follower storage node is the same as the reference log index in the state change request. When the local reference log index of the follower storage node is different from the reference log index in the state change request, the state change request is an invalid request, and a state change is rejected, so that the follower storage node can always maintain the same state as the leader storage node, thereby avoiding a case in which the leader storage node and the follower storage node are in different states.

In an embodiment, the method further includes:
determining state validity duration corresponding to the RO state locally stored in the follower storage node; and
determining elapsed validity duration for which the follower storage node is in the RO state; and changing from the RO state to the RW state when the elapsed validity duration reaches the state validity duration.

Specifically, after feeding back the response result representing rejection of the change to the RW state to the leader storage node, the follower storage node determines the state validity duration corresponding to the locally stored RO state. The follower storage node determines the elapsed validity duration for which the follower storage node is in the RO state. The elapsed validity duration represents survival duration since the follower storage node changes to the RO state. When the state validity duration corresponding to the RO state locally stored in the follower storage node reaches the state validity duration, the RO state of the follower storage node is invalid, and the RO state of the leader storage node is invalid. Then, the leader storage node automatically changes to the RW state, and the follower storage node also changes to the RW state to keep a consistent state with the leader storage node.

In this embodiment, the state validity duration corresponding to the RO state locally stored in the follower storage node is preset survival duration of the RO state, and the elapsed validity duration for which the follower storage node is in the RO state is determined to determine whether the survival duration of the RO state reaches preset survival duration. If so, the RO state is invalid. However, states of the leader storage node and the follower storage nodes remain consistent, and the state validity duration also remains consistent. The RO state of the follower storage node being invalid refers to the RO state of the leader storage node being invalid, and the leader storage node automatically changes to the RW state, thereby accurately ensuring state consistency of the leader storage node and the follower storage node.

FIG. 6 is a sequence diagram of changing from an RO state to an RW state according to an embodiment.
1) When receiving a data write request of a business terminal, a leader storage node in the RO state starts a state conversion process.
2) The leader storage node stops updating state validity duration corresponding to the RO state.
3) The leader storage node acquires a current reference log index, generates a state change request including the reference log index, and transmits the state change request to a follower storage node.
4) The follower storage node receives the state change request transmitted by the leader storage node in the RO state and acquires a reference log index of the leader storage node locally stored in the follower storage node. When the local reference log index of the follower storage node is the same as the reference log index in the state change request, the follower storage node generates a response result representing allowance of a change to the RW state. When the local reference log index of the follower storage node is different from the reference log index in the state change request, the follower storage node generates a response result representing rejection of the change to the RW state.
5) The follower storage node feeds back the response result to the leader storage node.
6) When the response result represents that the follower storage node is allowed to change to the RW state, the leader storage node changes from the RO state to the RW state.
7) When the response result represents that the follower storage node rejects changing to the RW state, the leader storage node determines state validity duration of the RO state and elapsed validity duration of the current RO state. When the elapsed validity duration reaches the state validity duration, the leader storage node changes from the RO state to the RW state.
8) Detect whether conversion from the RW state to the RO state needs to be performed.

In this embodiment, when receiving the data write request of the business terminal, the leader storage node in the RO state first transmits the state change request to the follower storage nodes to query whether the follower storage node agrees to change to the RW state together. The state change request carries the current latest reference log index of the leader storage node to inform the follower storage node of the latest reference log index, so that the follower storage node realizes data synchronization. Only when the follower storage node agrees on the change, the leader storage node changes from the RO state to the RW state to maintain state consistency with the follower storage node. When the follower storage node does not agree on the change, the leader storage node does not change to the RW state, but automatically changes to the RW state when the RO state is invalid. In addition, the follower storage node also automatically changes to the RW state when the RO state is invalid, thereby effectively maintaining the state consistency of the leader storage node and the follower storage node.

In an embodiment, a data processing method is provided, which is applied to a follower storage node, and includes:
receiving a state change request transmitted by the leader storage node in the RO state, the state change request including the reference log index when the leader storage node is in the RO state;
acquiring a reference log index of the leader storage node locally stored in the follower storage node;
feeding back a response result representing allowance of a change to the RW state to the leader storage node when the local reference log index of the follower storage node is the same as the reference log index in the state change request, the feeding back a response result representing allowance of a change to the RW state being configured for instructing the leader storage node to change from the RO state to the RW state;
feeding back a response result representing rejection of the change to the RW state to the leader storage node when the local reference log index of the follower storage node is different from the reference log index in the state change request, the response result representing rejection of the change to the RW state being configured for instructing the leader storage node to maintain the RO state;
determining state validity duration corresponding to the RO state locally stored in the follower storage nodes when the response result representing rejection of the change to the RW state is fed back to the leader storage node; determining elapsed validity duration for which the follower storage node is in the RO state; and changing from the RO state to the RW state when the elapsed validity duration reaches the state validity duration;
receiving business data and a log index of the business data that are transmitted by the leader storage node in the RW state; and locally performing a data synchronization operation at the follower storage node according to the business data and the log index of the business data, to obtain the synchronized log index and synchronized data;
receiving a state change instruction transmitted by the leader storage node when the leader storage node changes from the RW state to the RO state, the state change instruction including the reference log index when the leader storage node changes to the RO state, and the state validity duration corresponding to the RO state;
changing from the RW state to the RO state according to the state change instruction;
updating the reference log index of the leader storage node locally stored in the follower storage node based on the reference log index in the state change instruction;
updating state validity duration locally and currently stored in the follower storage node to the state validity duration corresponding to the RO state in the state change instruction;
determining a current data operation state of the follower storage node when receiving a data read request, the data operation state including the RO state and the RW state;
locally acquiring the reference log index from the follower storage node when the data operation state is the RO state, the reference log index being a recently stored log index when the leader storage node has an RW permission;
transmitting, when the data operation state is the RW state, an index acquisition request to the leader storage node in the RW state; and receiving the reference log index fed back by the leader storage node based on the index acquisition request;
acquiring a synchronized log index stored in the follower storage node, the synchronized log index being obtained by synchronizing a log index stored in the leader storage node;
acquiring target data requested by the data read request from local synchronized data of the follower storage node when the synchronized log index covers the reference log index; and
feeding back the target data as feedback data of the data read request.

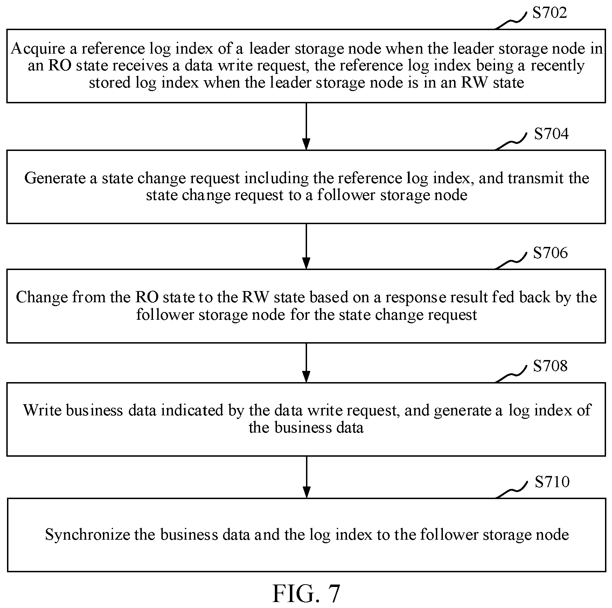

In an embodiment, as shown in FIG. 7, a data processing method is provided. An example in which the method is applied to a leader storage node of a computer device (the computer device may be the terminal or the server in FIG. 1) in FIG. 1 is used for description. The method includes the following operations.

Operation S702: Acquire a reference log index of the leader storage node when the leader storage node in an RO state receives a data write request of a business terminal, the reference log index being a recently stored log index when the leader storage node is in an RW state.

The reference log index is the recently stored log index when the leader storage node is in the RW state, that is, a latest stored log index when the leader storage node is in the RW state.

Specifically, when the leader storage node is in the RO state, the leader storage node has an RO permission and does not have a write permission. When the leader storage node is in the RW state, the leader storage node has an RW permission. When the leader storage node in the RO state receives the data write request, since the leader storage node does not have the write permission, it cannot write business data indicated by the data write request. Then, the leader storage node acquires a log index that is recently stored locally when the leader storage node has the RW permission, and uses the recently stored log index as the reference log index.

Operation S704: Generate a state change request including the reference log index, and transmit the state change request to a follower storage node.

The state change request is used by the leader storage node to request the follower storage node to allow a change from the RO state to the RW state.

Specifically, the leader storage node generates the state change request based on the reference log index and delivers the state change request to each follower storage node.

The follower storage node receives the state change request, generates a response result based on the reference log index in the state change request and a local reference log index of the follower storage node, and feeds back the response result to the leader storage node.

Operation S706: Change from the RO state to the RW state based on a response result fed back by the follower storage node for the state change request.

The response result refers to a response of the follower storage node to the state change request. There are two types of response results. One type represents allowing to change from the RO state to the RW state, and the other type represents rejecting to change from the RO state to the RW state.

Specifically, the leader storage node receives the response result fed back by the follower storage node for the state change request, and changes from the RO state to the RW state based on the response result.

When the response result represents that a change from the RO state to the RW state is allowed, the leader storage node may immediately change to the RW state. When the response result represents that the change from the RO state to the RW state is rejected, the leader storage node maintains the RO state, and automatically changes to the RW state until the RO state is invalid.

Operation S708: Write business data indicated by the data write request, and generate a log index of the business data.

The business data refers to any data that needs to be written into the leader storage node, and may be newly added data in the leader storage node, data obtained by modifying existing data in the leader storage node, or the like, but is not limited thereto.

Specifically, after the leader storage node changes to the RW state and has the RW permission, the leader storage node determines the business data indicated by the data write request, and writes the business data locally into the leader storage node. The leader storage node generates the log index of the business data, and associatively stores the business data and the log index of the business data locally.

Operation S710: Synchronize the business data and the log index to the follower storage node.

Specifically, the leader storage node generates a data synchronization instruction based on the business data and the log index. The data synchronization instruction includes the business data and the log index corresponding to the business data. The leader storage node transmits the data synchronization instruction to each follower storage node to synchronize the business data and the log index to the follower storage node.

The follower storage node receives the data synchronization instruction and parses out the business data and the log index. The follower storage node locally performs a data synchronization operation at the follower storage node according to the business data and the log index of the business data, to obtain a synchronized log index and synchronized data.

In this embodiment, when the leader storage node in the RO state receives the data write request, the reference log index of the leader storage node is acquired, and the reference log index is the recently stored log index when the leader storage node has the RW permission. The state change request including the reference log index is generated and transmitted to the follower storage node, so that the follower storage node can locally store the latest log index of the leader storage node. Thus, the follower storage node may directly use the local reference log index without acquiring the local reference log index from the leader storage node, so that the follower storage node may independently process the data read request, thereby improving the flexibility of data processing of the follower storage node. In addition, the state change request is adopted to query whether the follower storage node agrees to change to the RW state, and the follower storage node changes from the RO state to the RW state based on the response result fed back by the follower storage node for the state change request, to ensure the state consistency of the leader storage node and the follower storage node. The business data indicated by the data write request is written in the RW state, and the log index of the business data is generated so that the business data and the log index are synchronized to the follower storage node, and new data can be synchronized to the follower storage node in time, to ensure that when the user accesses the follower storage node subsequently, the follower storage node may independently process the data read request of the user without depending on the leader storage node, thereby reducing interaction with the leader storage node, improving the flexibility of the follower storage node, and improving a response speed of the follower storage node to the data read request.

In an embodiment, changing from the RO state to the RW state based on the response result fed back by the follower storage node for the state change request includes:
receiving the response result fed back by the follower storage node for the state change request; and changing from the RO state to the RW state when the response result represents that the follower storage node is allowed to change to the RW state.

Specifically, when the reference log index locally stored in the follower storage node is the same as the reference log index in the state change request, the follower storage node feeds back the response result representing allowance of a change to the RW state to the leader storage node.

The leader storage node receives the response result fed back by the follower storage node for the state change request. When the response result represents that the follower storage node is allowed to change to the RW state, the leader storage node changes from the RO state to the RW state.

In this embodiment, after the leader storage node changes to the RW state, the leader storage node configures state validity duration corresponding to the RW state and delivers the state validity duration to the follower storage node. The follower storage node receives the state validity duration, changes from the RO state to the RW state, and changes the locally stored state validity duration of the RO state to the state validity duration of the RW state.

In this embodiment, the response result fed back by the follower storage node for the state change request is received, and the leader storage node changes from the RO state to the RW state only when the follower storage node agrees to change to the RW state, thereby ensuring the state consistency with the follower storage node.

In an embodiment, changing from the RO state to the RW state based on the response result fed back by the follower storage node for the state change request includes:
determining state validity duration of the RO state when the response result represents that the follower storage node rejects changing to the RW state; determining elapsed validity duration for which the leader storage node is in the RO state; and changing from the RO state to the RW state when the elapsed validity duration reaches the state validity duration.

Specifically, when the local reference log index of the follower storage node is different from the reference log index in the state change request, the follower storage node feeds back a response result representing rejection of the change to the RW state to the leader storage node.

The leader storage node receives the response result fed back by the follower storage node for the state change request. When the response result represents that the follower storage node rejects changing to the RW state, the leader storage node maintains the current RO state and determines the state validity duration corresponding to the current RO state. The leader storage node determines the elapsed validity duration for which the leader storage node is in the RO state, determines whether the elapsed validity duration reaches the state validity duration, and waits for the elapsed validity duration to reach the state validity duration if the elapsed validity duration does not reach the state validity duration. When the elapsed validity duration reaches the state validity duration, the leader storage node changes from the RO state to the RW state.

In this embodiment, when the follower storage node rejects changing to the RW state, the leader storage node determines the state validity duration of the RO state and the elapsed validity duration for which the leader storage node is in the RO state. When the elapsed validity duration reaches the state validity duration, the RO state is invalid, and the RO state of the follower storage node is also invalid. Then, both the leader storage node and the follower storage node automatically change from the RO state to the RW state, thereby effectively ensuring consistency of state changes.

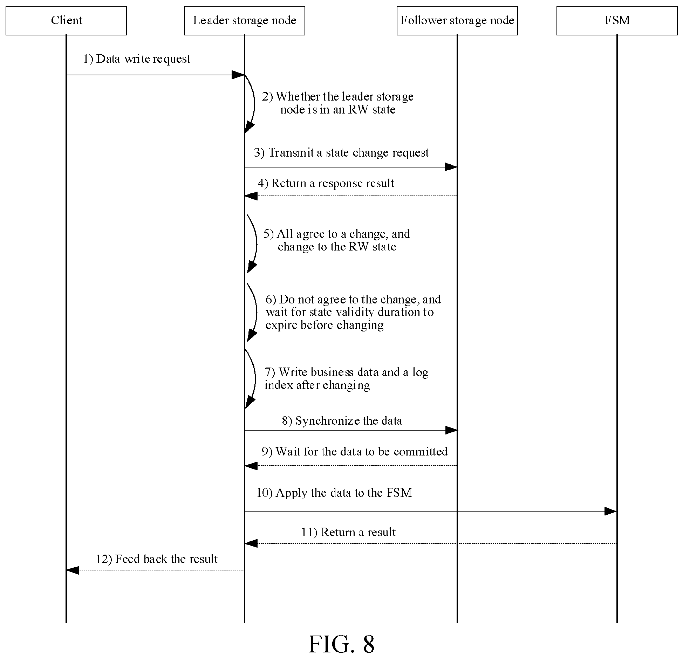

FIG. 8 is a sequence diagram of processing a data write request by a leader storage node according to an embodiment.
1) A user transmits the data write request to a leader storage node through a client running on a business terminal.
2) The leader storage node receives the data write request and detects whether the leader storage node is currently in an RW state.
3) When in the RO state, the leader storage node acquires a current reference log index, and the reference log index is a recently stored log index when the leader storage node has an RW permission. The leader storage node generates a state change request including the reference log index, and transmits the state change request to a follower storage node.
4) The follower storage node generates and feeds back a response result for the state change request.
5) The leader storage node receives the response result fed back by the follower storage node for the state change request. When the response result represents that the follower storage node is allowed to change to the RW state, the leader storage node changes from the RO state to the RW state.
6) When the response result represents that the follower storage node rejects changing to the RW state, the leader storage node determines state validity duration corresponding to the RO state and elapsed validity duration for which the leader storage node is in the RO state. When the elapsed validity duration reaches the state validity duration, the leader storage node changes from the RO state to the RW state.
7) In the RW state, the leader storage node writes business data indicated by the data write request, and generates a log index of the business data.
8) The leader storage node synchronizes the business data and the log index to the follower storage node.
9) The leader storage node waits for the data to be committed.
10) The leader storage node applies the log index corresponding to the business data to an FSM.
11) The FSM returns an applied result to the leader storage node.
12) The leader storage node feeds back the result to the client.

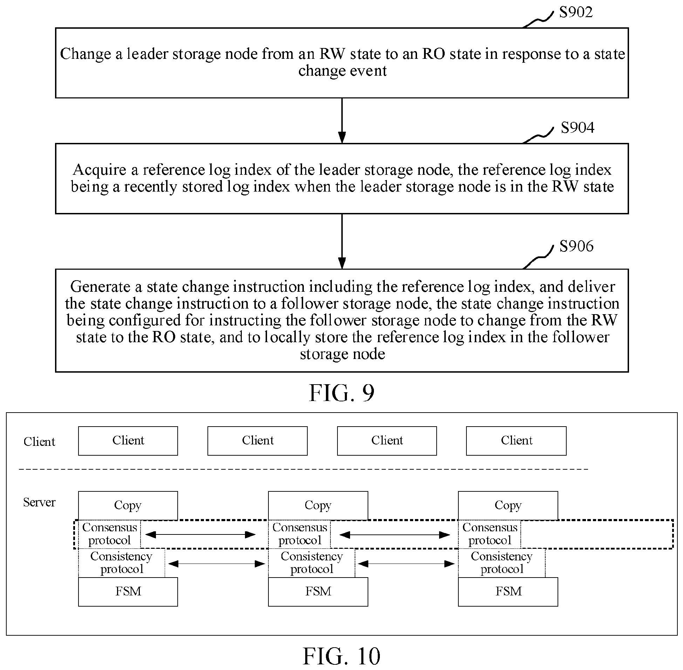

In an embodiment, as shown in FIG. 9, the method further includes the following operations.

Operation S902: Change the leader storage node from the RW state to the RO state in response to a state change event.

The state change event is a particular event that needs to be changed from the RW state to the RO state. The state change event may be at least one of the following: the leader storage node has executed a data write request; the leader storage node does not receive a data write request within preset duration; or elapsed validity duration of the RW state of the leader storage node reaches state validity duration corresponding to the RW state.

Specifically, when the leader storage node in the RW state receives the state change event, the leader storage node changes from the RW state to the RO state in response to the state change event.

For example, when the leader storage node in the RW state has executed the data write request, the leader storage node changes from the RW state to the RO state.

Alternatively, when the leader storage node in the RW state does not receive the data write request within the preset duration, the leader storage node changes from the RW state to the RO state.

Alternatively, when the elapsed validity duration for which the leader storage node is in the RW state reaches the state validity duration corresponding to the RW state, the leader storage node changes from the RW state to the RO state.

Operation S904: Acquire a reference log index of the leader storage node, the reference log index being a recently stored log index when the leader storage node has an RW permission.

Specifically, the leader storage node after changing to the RO state acquires a locally and recently stored log index. The recently stored log index is used as the reference log index. The locally and recently stored log index is a log index that is last stored locally by the leader storage node when the leader storage node is in the RW state.

Operation S906: Generate a state change instruction including the reference log index, and deliver the state change instruction to the follower storage node, the state change instruction being configured for instructing the follower storage node to change from the RW state to the RO state, and to locally store the reference log index in the follower storage node.

Specifically, the leader storage node in the RO state generates the state change instruction based on the reference log index, the state change instruction including the reference log index. The leader storage node delivers the state change instruction to each follower storage node to instruct each follower storage node to change from the RW state to the RO state, and instruct each follower storage node to locally store the reference log index. When the follower storage node locally stores the reference log index, the state change instruction is further configured for instructing each follower storage node to update the local reference log index.

In this embodiment, the leader storage node changes from the RW state to the RO state in response to the state change event, so that the leader storage node can automatically change to the RO state, thereby improving the flexibility and autonomy of the state change of the leader storage node. The reference log index of the leader storage node is acquired. The acquired reference log index is the recently stored log index when the leader storage node has the RW permission, and is the latest log index of the leader storage node. The state change instruction including the reference log index is generated and delivered to the follower storage node to instruct the follower storage node to change from the RW state to the RO state and instruct the follower storage node to locally store the latest log index, so that the follower storage node can store the current latest log index of the leader storage node, and then can determine, through the latest log index, whether the follower storage node has synchronized latest business data locally, thereby ensuring the consistency of log indexes and business data between the leader storage node and follower storage node.

In an embodiment, generating the state change instruction including the reference log index includes:
configuring the state validity duration corresponding to the RO state, the state validity duration being configured for constraining duration for which the leader storage node and the follower storage node are in the RO state; and generating the state change instruction including the reference log index and the state validity duration.

Specifically, the leader storage node locally pre-stores the state validity duration corresponding to the RO state and the state validity duration corresponding to the RW state.

When the leader storage node changes from the RW state to the RO state, the leader storage node configures the state validity duration corresponding to the RO state. The leader storage node acquires the reference log index, generates the state change instruction based on the reference log index and the state validity duration corresponding to the RO state, and then delivers the state change instruction to each follower storage node to instruct the follower storage node to change from the RW state to the RO state and to locally store the reference log index in the follower storage node, and to instruct the follower storage node to update the locally and currently stored state validity duration to the state validity duration corresponding to the RO state in the state change instruction.

In this embodiment, the leader storage node configures the state validity duration corresponding to the RO state, to constrain, through the state validity duration, the duration for which the leader storage node and the follower storage node are in the RO state, so that the RO state may be automatically valid or automatically invalid. The state change instruction is delivered to the follower storage node so that the follower storage node and the leader storage node always maintain in a consistent state. In addition, there is no need for frequent interaction with the leader storage node, thereby reducing dependency of the follower storage node on the leader storage node.

In an embodiment, a data processing method is provided, which is applied to a leader storage node, and includes:
acquiring a reference log index of the leader storage node when the leader storage node in an RO state receives a data write request, the reference log index being a recently stored log index when the leader storage node has an RW permission;
generating a state change request including the reference log index, and transmitting the state change request to a follower storage node;
receiving a response result fed back by the follower storage node for the state change request;
changing from the RO state to the RW state when the response result represents that the follower storage node is allowed to change to the RW state;
determining state validity duration corresponding to the RO state when the response result represents that the follower storage node rejects changing to the RW state;
determining elapsed validity duration for which the leader storage node is in the RO state;
changing from the RO state to the RW state when the elapsed validity duration reaches the state validity duration;
writing, in the RW state, business data indicated by the data write request, and generating a log index of the business data; and synchronizing the business data and the log index to the follower storage node;
changing the leader storage node from the RW state to the RO state in response to a state change event;
acquiring the reference log index of the leader storage node, the reference log index being the recently stored log index when the leader storage node has the RW permission;
configuring the state validity duration corresponding to the RO state, the state validity duration being configured for constraining duration for which the leader storage node and the follower storage node are in the RO state; and
generating a state change instruction including the reference log index and the state validity duration, and delivering the state change instruction to the follower storage nodes, the state change instruction being configured for instructing the follower storage node to change from the RW state to the RO state, and to update the reference log index locally stored in the follower storage node.

In an embodiment, a data processing method is provided. The data processing method may be applied to all distributed storage scenes. For example, the distributed storage scenes include distributed file systems (a Google file system (GES), a Hadoop distributed file system (HDFS), a JuiceFS, Posix semantic network attached storage (NAS), and the like), object storage (Amazon S3, Aliyun OSS, a Baidu BOS, and the like), distributed databases (MySQL, Oracle, HMase, BigTable, Spanner, TiDB, TiKV, ByteKV, and the like), distributed block storage systems (a cloud hard disk and a cloud storage pool), distributed cache systems (Redis, MemCache, and the like), and distributed message queues (Kafka, RocketMQ, and the like).

An architecture in which the data processing method is applied to a distributed storage scene is shown in FIG. 10. The server has a plurality of copies, and each copy is a node. Each node has a respective FSM, and may further implement a consensus protocol (Faler) and a consistency protocol (LBCP) to ensure data consistency. Nodes are divided into a leader storage node and a follower storage node. A client completes data writing and data reading of the distributed system through the nodes in FIG. 10.

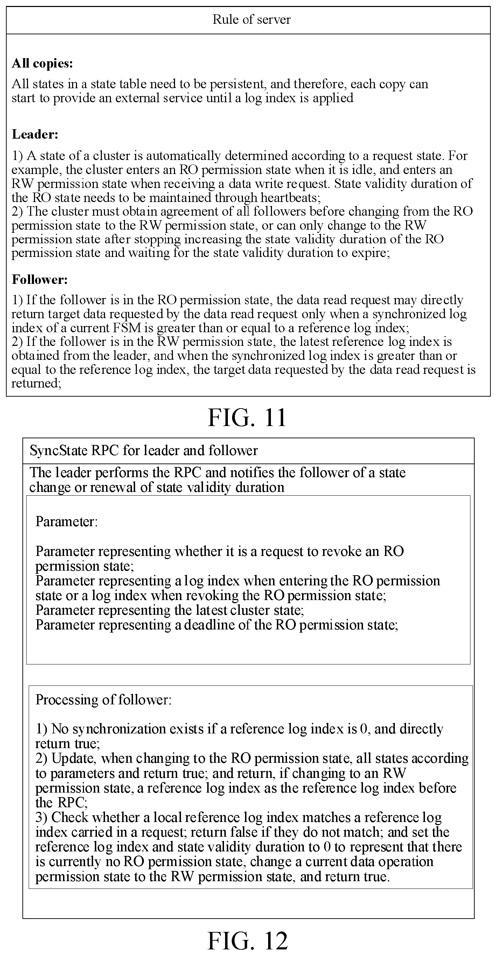

Main states, rules, and RPCs involved in state change logic of the data processing method of this embodiment are defined in FIG. 11 and FIG. 12.

All copies have the following parameters: cur_state, representing a current data operation state of a cluster, including an RO state and an RW state;
cur_ro_log_index, representing a log index of a current RO state, that is, a log index when switching to the RO state; and
cur_ro_lease_ts, representing a deadline of the current RO state.

As shown in FIG. 11, rules that copies of a server need to follow are presented. Rules that all copies need to follow are as follows.

All states in a state table need to be persistent, and therefore, each copy can start to provide an external service, for example, processing SyncState RPC, until a log index is applied.

Rules that a leader, that is, a leader storage node, needs to follow are as follows.
1) A state of a cluster is automatically determined according to a request state. For example, the cluster enters the RO state when it is idle, and enters the RW state when receiving a data write request. State validity duration (lease) of the RO state needs to be maintained through heartbeats.
2) The cluster needs to obtain agreement of all followers before changing from the RO state to the RW state, or can only change to the RW state after stopping increasing the lease of RO and waiting for the lease to expire. The follower is the follower storage node.

Rules that a follower, that is, a follower storage node, needs to follow are as follows.
1) If the follower is in the RO state, the data read request may directly return target data requested by the data read request only when a synchronized log index (applied index) of a current FSM is greater than or equal to a reference log index (cur_ro_log_index).
2) If the follower is in the RW state, the latest cur_ro_log_index needs to be obtained from the leader, and when the applied index is greater than or equal to cur_ro_log_index, the target data requested by the data read request is returned.

Related parameters and processing of the SyncState RPC of a leader and a follower are shown in FIG. 12. The leader performs the RPC when needing to notify the follower of a state change or renewal of the lease of RO. Related parameters of the RPC are as follows:
is_revoking, representing whether it is a request to revoke the RO state; ro_log_index, representing a log index when entering the RO state or a log index when revoking the RO state; and new_state, valid when is_revoking is false, representing the latest cluster state; and
ro_lease_ts, valid when is_revoking is false, representing a deadline of the RO state.

A value is returned:
accepted, or true represents agreement or permission; ro_log_index is meaningful when is_revoking is true, representing a log index of the current RO state. is_revoking being true represents revoking the RO state, i.e., switching the RO state to the RW state. is_revoking being false represents switching from the RW state to the RO state.

Processing of the follower is as follows:
1) no synchronization existing if ro_log_index is 0, and directly returning true;
2) updating, if is_revoking is false, all states according to parameters, and returning true; and returning, if is_revoking is true, a value ro_log_index as cur_ro_log_index before RPC processing; and
3) checking whether ro_log_index matches cur_ro_log_index; returning false if they do not match; and setting cur_ro_log_index and cur_ro_lease_ts to 0 to represent that there is currently no RO state, changing cur_state to RW, and returning true.

A specific processing process is as follows.

A user transmits a data write request to a leader storage node through a client running on a business terminal. The leader storage node receives the data write request and detects whether the leader storage node is currently in an RW state.

When in an RO state, the leader storage node stops updating state validity duration corresponding to the RO state.

The leader storage node acquires a current reference log index, generates a state change request including the reference log index, and transmits the state change request to a follower storage node.

The follower storage node receives the state change request transmitted by the leader storage node in the RO state and acquires a reference log index of the leader storage node locally stored in the follower storage node. When the local reference log index of the follower storage node is the same as the reference log index in the state change request, the follower storage node generates a response result representing allowance of a change to the RW state. When the local reference log index of the follower storage node is different from the reference log index in the state change request, the follower storage node generates a response result representing rejection of the change to the RW state.

The follower storage node feeds back the response result to the leader storage node. When the response result represents that the follower storage node is allowed to change to the RW state, the leader storage node changes from the RO state to the RW state.

When the response result represents that the follower storage node rejects changing to the RW state, the leader storage node determines state validity duration of the RO state and elapsed validity duration of the current RO state. When the elapsed validity duration reaches the state validity duration, the leader storage node changes from the RO state to the RW state.

In the RW state, the leader storage node writes business data indicated by the data write request, and generates a log index of the business data. The leader storage node synchronizes the business data and the log index to the follower storage nodes.

After waiting for the data to be committed, the leader storage node applies the log index corresponding to the business data to an FSM, and the FSM returns an applied result to the leader storage node. The leader storage node feeds back the result to the client.

The leader storage node detects whether the leader storage node needs to convert from the RW state to the RO state. If the leader storage node is currently in the RW state and needs to be changed to the RO state, the leader storage node stops cyclically detecting the current data operation state.

The leader storage node changes from the RW state to the RO state and configures the state validity duration corresponding to the RO state.

The leader storage node acquires a recent reference log index, generates a permission state change including the reference log index and the state validity duration, and transmits the permission state change to the follower storage node.

The follower storage node receives the state change instruction transmitted by the leader storage node, and changes from the RW state to the RO state according to the state change instruction.

The reference log index in the state change instruction is updated to a locally stored reference log index of the leader storage node, and state validity duration locally and currently stored in the follower storage node is updated to the state validity duration corresponding to the RO state in the state change instruction.

When elapsed validity duration corresponding to the RO state is about to reach the state validity duration, the leader storage node delivers a state validity duration update instruction to notify the follower storage node to update the state validity duration corresponding to the follower storage node.

The leader storage node detects whether the leader storage node needs to change from the RO state to the RW state.

In this embodiment, the RW state, the RO state, and the state validity duration corresponding to the RO state are added so that when the user initiates the data read request to the follower, the follower may determine, according to the data operation state of the follower, whether linear consistency can be satisfied when the follower executes the read request, so that the number of operations per second of a system can linearly increase as the number of copies increases, thereby resolving the problem that a reading capability of the system implemented based on LBCP is constrained by the capability upper limit of the leader.

According to the data processing method of this embodiment, the read throughput in read-intensive, write-light scenes is effectively improved, so that the read throughput of the system can be improved from hundreds of thousands of operations per second to millions or even ten millions, and the system can immediately switch to the RW state when receiving a data write request. When a follower cannot respond to a change from the RO state to the RW state in time, the data write request waits for the RO state to expire, thereby effectively ensuring data consistency.

Although various operations in the flowcharts involved in the foregoing embodiments are shown sequentially as indicated by the arrows, these operations are not necessarily performed in the order indicated by the arrows. These operations are performed in no strict order unless explicitly stated herein, and these operations may be performed in other orders. Moreover, at least some of the operations in the flowcharts involved in the foregoing embodiments may include a plurality of operations or a plurality of stages. These operations or stages are not necessarily performed at the same time, but may be performed at different times. These operations or stages are not necessarily performed in sequence, but may be performed in turn or in alternation with other operations or at least some of the operations or stages in other operations.

Based on the same inventive concept, embodiments of the present disclosure further provide a data processing apparatus, configured to implement the foregoing data processing method. Implementation solutions provided by the apparatus for resolving problems are similar to the implementation solutions described in the foregoing method. Therefore, specific limitations in one or more embodiments of the data processing apparatus provided below may refer to the limitations on the data processing method in the foregoing descriptions. Details are not described herein again.

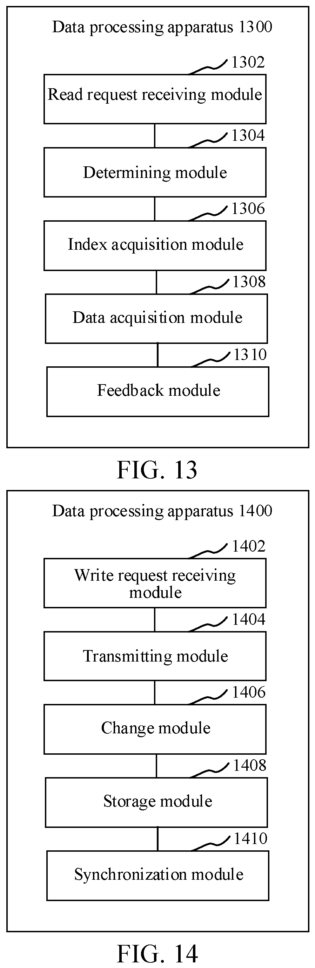

In an embodiment, as shown in FIG. 13, a data processing apparatus 1300 is provided, which is applied to a follower storage node, and includes:
a read request receiving module 1302, configured to determine a current data operation state of the follower storage node when receiving a data read request, the data operation state including an RO state and an RW state;
a determining module 1304, configured to determine a reference log index of a leader storage node according to the data operation state, the reference log index being a recently stored log index when the leader storage node is in the RW state, and the leader storage node and the follower storage node being in a same data operation state;
an index acquisition module 1306, configured to acquire a synchronized log index stored in the follower storage node, the synchronized log index being obtained by synchronizing a log index stored in the leader storage node;
a data acquisition module 1308, configured to locally acquire business data requested by the data read request from the follower storage node when the synchronized log index covers the reference log index; and
a feedback module 1310, configured to feed back the business data to the business terminal.

In this embodiment, when receiving the data read request, the follower storage node determines the current data operation state of the follower storage node to determine whether the follower storage node is in the RO state or the RW state. The reference log index of the leader storage node is determined according to the data operation state. The reference log index is a recently stored log index when the leader storage node has an RW permission, so that the follower storage node may determine the data operation state of the leader storage node according to the data operation state of the follower storage node, thereby accurately determining whether data consistency can be satisfied when the follower storage node executes the data read request. The synchronized log index stored in the follower storage node is acquired. The synchronized log index is obtained by synchronizing the log index stored in the leader storage node. When the synchronized log index covers the reference log index, the follower storage node has synchronized the latest business data of the leader storage node locally. Thus, the follower storage node satisfies data consistency, and a case in which old data is fed back to the data read request when data of the follower storage node and data of the leader storage node are not synchronized can be effectively avoided. When data is consistent, the target data requested by the data read request is locally obtained from the follower storage nodes, and the target data is fed back as the feedback data of the data read request, so that the follower storage nodes can independently process the data read request without depending on the leader storage node for processing, thereby greatly improving flexibility and response efficiency of the follower storage nodes.

In an embodiment, the determining module 1304 is further configured to locally acquire a reference log index from the follower storage node when the follower storage node is in the RO state; transmit, when the follower storage node is in the RW state, an index acquisition request to the leader storage node in the RW state; and receive the reference log index fed back by the leader storage node based on the index acquisition request.

In this embodiment, when the data operation state is the RO state, the leader storage node is also in the RO state. Thus, the reference log index of the leader storage node locally stored in the follower storage node is the latest, and the follower storage node may directly use the local reference log index without interacting with the leader storage node, so that the follower storage node may independently process the data read request, thereby improving the flexibility of data processing of the follower storage node. When the data operation state is the RW state, the leader storage node is also in the RW state, that is, the leader storage node may have a new log index in this case. Therefore, the local reference log index of the follower storage node is not the latest log index of the leader storage node. Thus, the index acquisition request is transmitted to the leader storage node in the RW state to accurately acquire the current latest reference log index of the leader storage node. In addition, the follower storage node may accurately determine, according to the data operation state of the follower storage node, whether linear consistency can be satisfied when the follower storage node executes the data read request, so that the follower storage node processes the data read request when the linear consistency is satisfied, thereby effectively avoiding a case in which old data is fed back to the data read request when data of the follower storage node and data of the leader storage node are not synchronized.

In an embodiment, the apparatus further includes a change module. The change module is configured to receive a state change instruction transmitted by the leader storage node when the leader storage node changes from the RW state to the RO state, the state change instruction including the reference log index when the leader storage node changes to the RO state; change from the RW state to the RO state according to the state change instruction; and update the reference log index locally stored in the follower storage node for the leader storage node based on the reference log index in the state change instruction.

In this embodiment, the state change instruction transmitted by the leader storage node when the leader storage node changes from the RW state to the RO state is received, to change from the RW state to the RO state according to the state change instruction, so that data operation states of the follower storage node and the leader storage node can be kept consistent. The state change instruction includes the reference log index when the leader storage node changes to the RO state, so that the follower storage node updates the reference log index of the leader storage node locally stored in the follower storage node based on the reference log index in the state change instruction, and the follower storage node can locally store the latest log index of the leader storage node, to reduce interaction with the leader storage node and improve a speed of responding to the data read request.

In an embodiment, the state change instruction further includes state validity duration of the RO state. The change module is further configured to update state validity duration locally and currently stored in the follower storage node to the state validity duration of the RO state in the state change instruction.

In this embodiment, the state validity duration locally and currently stored in the follower storage node is updated to the state validity duration of the RO state in the state change instruction to set validity duration for each data operation state, so that the data operation state may be automatically valid or automatically invalid without frequent interaction with the leader storage node, thereby reducing dependency of the follower storage node on the leader storage node.

In an embodiment, the apparatus further includes a response module. The response module is further configured to receive a state change request transmitted by the leader storage node in the RO state, the state change request including the reference log index when the leader storage node is in the RO state; acquire the reference log index of the leader storage node locally stored in the follower storage node; and feed back a response result representing allowance of a change to the RW state to the leader storage node when the locally stored reference log index is the same as the reference log index in the state change request, the feeding back a response result representing allowance of a change to the RW state being configured for instructing the leader storage node to change from the RO state to the RW state.

In this embodiment, the state change request transmitted by the leader storage node in the RO state is received, and the transmitted state change request includes the reference log index when the leader storage node is in the RO state. The reference log index of the leader storage node locally stored in the follower storage node is acquired to determine whether the state change request is valid based on whether the local reference log index of the follower storage node is the same as the reference log index in the state change request, thereby feeding back the response result representing allowance of a change to the RW state to the leader storage node when the state change request is valid. Thus, state changes between the leader storage node and the follower storage nodes may be consistent, thereby facilitating data consistency.

In an embodiment, the apparatus further includes a synchronization apparatus. The synchronization apparatus is configured to receive business data and a log index of the business data that are transmitted by the leader storage node in the RW state; and locally perform a data synchronization operation at the follower storage node according to the business data and the log index of the business data, to obtain the synchronized log index and synchronized data.

In this embodiment, the business data and the log index of the business data that are transmitted by the leader storage node in the RW state are received, and the data synchronization operation is locally performed at the follower storage node according to the business data and the log index of the business data, to obtain the synchronized log index and the synchronized data. Thus, new data written by the leader storage node can be synchronized in time, to ensure that when the user accesses the follower storage node subsequently, the follower storage node may independently process the data read request of the user without depending on the leader storage node, thereby improving the flexibility of the follower storage node.

In an embodiment, the response module is further configured to feed back a response result representing rejection of the change to the RW state to the leader storage node when the local reference log index of the follower storage node is different from the reference log index in the state change request, the response result representing rejection of the change to the RW state being configured for instructing the leader storage node to maintain the RO state.

In this embodiment, whether the state change request is valid is determined based on whether the local reference log index of the follower storage node is the same as the reference log index in the state change request. When the local reference log index of the follower storage node is different from the reference log index in the state change request, the state change request is an invalid request, and a state change is rejected, so that the follower storage node can always maintain the same state as the leader storage node, thereby avoiding a case in which the leader storage node and the follower storage node are in different states.

In an embodiment, the response module is further configured to feed back a response result representing rejection of the change to the RW state to the leader storage node when the local reference log index of the follower storage node is different from the reference log index in the state change request, the response result representing rejection of the change to the RW state being configured for instructing the leader storage node to maintain the RO state.

In this embodiment, the state validity duration corresponding to the RO state locally stored in the follower storage node is preset survival duration of the RO state, and the elapsed validity duration for which the follower storage node is in the RO state is determined to determine whether the survival duration of the RO state reaches preset survival duration. If so, the RO state is invalid. However, states of the leader storage node and the follower storage nodes remain consistent, and the state validity duration also remains consistent. The RO state of the follower storage node being invalid refers to the RO state of the leader storage node being invalid, and the leader storage node automatically changes to the RW state, thereby accurately ensuring state consistency of the leader storage node and the follower storage node.

In an embodiment, as shown in FIG. 14, a data processing apparatus 1400 is provided, which is applied to a leader storage node, and includes:
a write request receiving module 1402, configured to acquire a reference log index of the leader storage node when the leader storage node in an RO state receives a data write request of a business terminal, the reference log index being a recently stored log index when the leader storage node is in an RW state;
a transmitting module 1404, configured to generate a state change request including the reference log index, and transmit the state change request to a follower storage node;
a change module 1406, configured to change from the RO state to the RW state based on a response result fed back by the follower storage node for the state change request;
a storage module 1408, configured to write business data indicated by the data write request, and generate a log index of the business data; and
a synchronization module 1410, configured to synchronize the business data and the log index to the follower storage node.

In this embodiment, when the leader storage node in the RO state receives the data write request, the reference log index of the leader storage node is acquired, and the reference log index is the recently stored log index when the leader storage node is in the RW state. The state change request including the reference log index is generated and transmitted to the follower storage node, so that the follower storage node can locally store the latest log index of the leader storage node. Thus, the follower storage node may directly use the local reference log index without acquiring the local reference log index from the leader storage node, so that the follower storage node may independently process the data read request, thereby improving the flexibility of data processing of the follower storage node. In addition, the state change request is adopted to query whether the follower storage node agrees to change to the RW state, and the follower storage node changes from the RO state to the RW state based on the response result fed back by the follower storage node for the state change request, to ensure the state consistency of the leader storage node and the follower storage node. The business data indicated by the data write request is written in the RW state, and the log index of the business data is generated so that the business data and the log index are synchronized to the follower storage node, and new data can be synchronized to the follower storage node in time, to ensure that when the user accesses the follower storage node subsequently, the follower storage node may independently process the data read request of the user without depending on the leader storage node, thereby reducing interaction with the leader storage node, improving the flexibility of the follower storage node, and improving a response speed of the follower storage node to the data read request.

In an embodiment, the change module 1406 is further configured to receive the response result fed back by the follower storage node for the state change request; and change from the RO state to the RW state when the response result represents that the follower storage node is allowed to change to the RW state.

In this embodiment, the response result fed back by the follower storage node for the state change request is received, and the leader storage node changes from the RO state to the RW state only when the follower storage node agrees to change to the RW state, thereby ensuring the state consistency with the follower storage node.

In an embodiment, the change module 1406 is further configured to determine state validity duration corresponding to the RO state when the response result represents that the follower storage node rejects changing to the RW state; determine elapsed validity duration for which the leader storage node is in the RO state; and change from the RO state to the RW state when the elapsed validity duration reaches the state validity duration.

In this embodiment, when the follower storage node rejects changing to the RW state, the leader storage node determines the state validity duration corresponding to the RO state and the elapsed validity duration for which the leader storage node is in the RO state. When the elapsed validity duration reaches the state validity duration, the RO state is invalid, and the RO state of the follower storage node is also invalid. Then, both the leader storage node and the follower storage node automatically change from the RO state to the RW state, thereby effectively ensuring consistency of state changes.

In an embodiment, the change module 1406 is further configured to change the leader storage node from the RW state to the RO state in response to a state change event; acquire a reference log index of the leader storage node, the reference log index being a recently stored log index when the leader storage node has an RW permission; and generate a state change instruction including the reference log index, and transmit the state change instruction to the follower storage nodes, the state change instruction being configured for instructing the follower storage node to change from the RW state to the RO state, and to locally store the reference log index in the follower storage node.

In this embodiment, the leader storage node changes from the RW state to the RO state in response to the state change event, so that the leader storage node can automatically change to the RO state, thereby improving the flexibility and autonomy of the state change of the leader storage node. The reference log index of the leader storage node is acquired. The acquired reference log index is the recently stored log index when the leader storage node has the RW permission, and is the latest log index of the leader storage node. The state change instruction including the reference log index is generated and delivered to the follower storage node to instruct the follower storage node to change from the RW state to the RO state and instruct the follower storage node to locally store the latest log index, so that the follower storage node can store the current latest log index of the leader storage node, and then can determine, through the latest log index, whether the follower storage node has synchronized latest business data locally, thereby ensuring the consistency of log indexes and business data between the leader storage node and follower storage node.

In an embodiment, the change module 1406 is further configured to configure the state validity duration corresponding to the RO state, the state validity duration being configured for constraining duration for which the leader storage node and the follower storage node are in the RO state; and generate the state change instruction including the reference log index and the state validity duration.

In this embodiment, the leader storage node configures the state validity duration corresponding to the RO state, to constrain, through the state validity duration, the duration for which the leader storage node and the follower storage node are in the RO state, so that the RO state may be automatically valid or automatically invalid. The state change instruction is delivered to the follower storage node so that the follower storage node and the leader storage node always maintain in a consistent state. In addition, there is no need for frequent interaction with the leader storage node, thereby reducing dependency of the follower storage node on the leader storage node.

The various modules in the foregoing data processing apparatus may be implemented in whole or in part by software, hardware, and a combination of the two. The foregoing modules may be embedded in the form of hardware or stored separately from a processor in a computer device, or may be stored in the form of software in a memory of the computer device, facilitating the processor to call the foregoing modules to perform the corresponding operations.

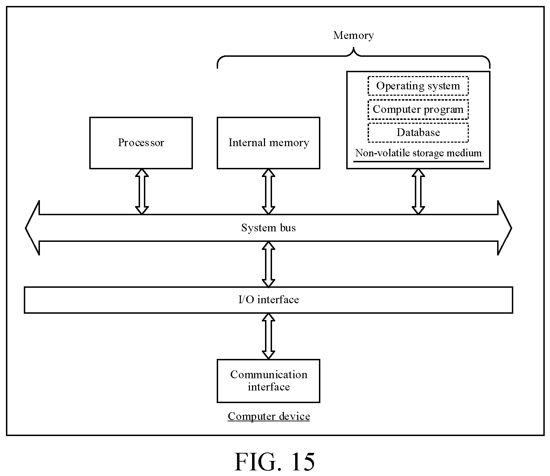

In an embodiment, a computer device is provided. The computer device may be a server, and its internal structure may be shown in FIG. 15. The computer device includes a processor, a memory, an input/output (I/O) interface, and a communication interface. The processor, the memory, and the I/O interface are connected through a system bus, and the communication interface is connected to the system bus through the I/O interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for running the operating system and the computer program in the non-volatile storage medium. The database of the computer device is configured to store data related to data processing. The I/O interface of the computer device is configured to exchange information between the processor and an external device. The communication interface of the computer device is configured to communicate with an external terminal through a network connection. The computer program, when executed by the processor, implements a data processing method.

A person skilled in the art may understand that the structure shown in FIG. 15 is merely a block diagram of a portion of the structure relevant to the solution of the present disclosure and does not constitute a limitation on the computer device to which the solution of the present disclosure is applied. A specific computer device may include more or fewer components than those shown in the drawings, a combination of some components, or a different arrangement of components.

In an embodiment, a computer device is further provided, including a memory and a processor. The memory has a computer program stored therein, and the processor, when executing the computer program, implements the operations in the foregoing method embodiments.

In an embodiment, a computer-readable storage medium is provided, having a computer program stored therein. The computer program, when executed by a processor, implements the operations in the foregoing method embodiments.

In an embodiment, a computer program product is provided, including a computer program. The computer program, when executed by a processor, implements the operations in the foregoing method embodiments.

User information (including, but not limited to, user device information, user personal information, and the like) and data (including, but not limited to, data for analysis, data for storage, data for displaying, and the like) involved in the present disclosure are all information and data that are authorized by users or fully authorized by all parties. Collection, use, and processing of related data need to comply with relevant regulations.

A person skilled in the art may understand that all or some of procedures of the method in the foregoing embodiments may be accomplished by instructing the relevant hardware through the computer program. The computer program may be stored in a non-volatile computer-readable storage medium and may include the procedures of the foregoing method embodiments when executed. Any reference to the memory, databases, or other media used in the embodiments provided in the present disclosure may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM), an external cache memory, or the like. By way of illustration and not limitation, the RAM may be in a variety of forms, such as a static random access memory (SRAM) or a dynamic random access memory (DRAM). The database involved in various embodiments provided in the present disclosure may include at least one of a relational database and a non-relational database. The non-relational database may include a blockchain-based distributed database or the like, but is not limited thereto. The processor involved in various embodiments provided in the present disclosure may be a general-purpose processor, a central processing unit, a graphics processing unit, a digital signal processor, a programmable logic device, a data processing logic device based on quantum computing, or the like, but is not limited thereto.

Technical features of the foregoing embodiments may be combined in different manners to form other embodiments. To make description concise, not all possible combinations of the technical features in the foregoing embodiments are described. However, as long as no conflict exists, the combinations of these technical features shall be considered as falling within the scope recorded by this specification.

The foregoing embodiments express only several implementations of the present disclosure, which are described in a relatively specific and detailed manner, but are not to be construed as a limitation of the patent scope. For a person skilled in the art, several transformations and improvements may be made without departing from the idea of the present disclosure. These transformations and improvements belong to the protection scope of the present disclosure. Therefore, the protection scope of the patent of the present disclosure shall be subject to the appended claims.

## Claims

1. A method for data processing, executable by a follower storage node of a computer device, the method comprising:
determining a current data operation state of the follower storage node when receiving a data read request from a terminal, wherein the current data operation state comprises a read-only (RO) state and a read-write (RW) state;
determining a reference log index of a leader storage node based on the current data operation state, wherein the reference log index is a recently stored log index when the leader storage node is in the RW state, and the leader storage node and the follower storage node are in a same data operation state;
acquiring a synchronized log index stored in the follower storage node, wherein the synchronized log index is obtained by synchronizing a log index stored in the leader storage node;
acquiring data requested by the data read request from the follower storage node when the synchronized log index covers the reference log index; and
feeding back the data to the terminal.

2. The method according to claim 1, wherein determining the reference log index of the leader storage node based on the current data operation state comprises:
locally acquiring a reference log index for the leader storage node from the follower storage node when the follower storage node is in the RO state;
transmitting, when the follower storage node is in the RW state, an index acquisition request to the leader storage node in the RW state; and
receiving the reference log index fed back by the leader storage node based on the index acquisition request.

3. The method according to claim 2, further comprising:
receiving a state change instruction transmitted by the leader storage node when the leader storage node changes from the RW state to the RO state, wherein the state change instruction comprises the reference log index when the leader storage node changes to the RO state;
changing from the RW state to the RO state according to the state change instruction; and
updating the reference log index locally stored in the follower storage node for the leader storage node based on the reference log index in the state change instruction.

4. The method according to claim 3, wherein the state change instruction further comprises a state validity duration of the RO state; and the method further comprises:
updating a state validity duration locally and currently stored in the follower storage node to the state validity duration of the RO state in the state change instruction.

5. The method according to any one of claims 1 to 4, further comprising:
receiving a state change request transmitted by the leader storage node in the RO state, wherein the state change request comprises a reference log index when the leader storage node is in the RO state;
acquiring the reference log index locally stored in the follower storage node for the leader storage node; and
feeding back a response result representing allowance of a change to the RW state to the leader storage node when the locally stored reference log index is the same as the reference log index in the state change request, wherein the response result representing allowance of the change to the RW state is used for instructing the leader storage node to change from the RO state to the RW state.

6. The method according to claim 5, further comprising:
receiving data and a log index of the data that are transmitted by the leader storage node in the RW state; and
locally performing a data synchronization operation at the follower storage node based on the data and the log index of the data, to obtain the synchronized log index and synchronized data.

7. The method according to claim 5, further comprising:
feeding back a response result representing rejection of the change to the RW state to the leader storage node when the reference log index locally stored in the follower storage node is different from the reference log index in the state change request, wherein the response result representing rejection of the change to the RW state is used for instructing the leader storage node to maintain the RO state.

8. The method according to claim 7, further comprising:
determining a state validity duration of the RO state locally stored in the follower storage node;
determining an elapsed validity duration for which the follower storage node is in the RO state; and
changing from the RO state to the RW state when the elapsed validity duration reaches the state validity duration.

9. A method for data processing, executable by a leader storage node of a computer device, the method comprising:
acquiring a reference log index of the leader storage node when the leader storage node in a readonly (RO) state receives a data write request from a terminal, wherein the reference log index is a recently stored log index when the leader storage node is in a read-write (RW) state;
generating a state change request comprising the reference log index, and transmitting the state change request to a follower storage node;
changing from the RO state to the RW state based on a response result fed back by the follower storage node for the state change request;
writing data indicated by the data write request, and generating a log index of the data; and
synchronizing the data and the log index to the follower storage node.

10. The method according to claim 9, wherein changing from the RO state to the RW state based on the response result fed back by the follower storage node for the state change request comprises:
receiving the response result fed back by the follower storage node for the state change request; and
changing from the RO state to the RW state when the response result represents that the follower storage node is allowed to change to the RW state.

11. The method according to claim 9, wherein changing from the RO state to the RW state based on the response result fed back by the follower storage node for the state change request comprises:
determining a state validity duration of the RO state when the response result represents that the follower storage node rejects changing to the RW state;
determining an elapsed validity duration for which the leader storage node is in the RO state; and
changing from the RO state to the RW state when the elapsed validity duration reaches the state validity duration.

12. The method according to any one of claims 9 to 11, further comprising:
changing from the RW state to the RO state in response to a state change event;
acquiring the reference log index of the leader storage node; and
generating a state change instruction comprising the reference log index, and transmitting the state change instruction to the follower storage node, wherein the state change instruction is used for instructing the follower storage node to change from the RW state to the RO state, and to locally store the reference log index in the follower storage node.

13. The method according to claim 12, wherein generating the state change instruction comprising the reference log index comprises:
configuring a state validity duration corresponding to the RO state, wherein the state validity duration is used for constraining a duration for which the leader storage node and the follower storage node are in the RO state; and
generating the state change instruction comprising the reference log index and the state validity duration.

14. An apparatus for data processing, located in a follower storage node, the apparatus comprising:
a read request receiving module, configured to determine a current data operation state of the follower storage node when receiving a data read request from a terminal, wherein the current data operation state comprises a read-only (RO) state and a read-write (RW) state;
a determining module, configured to determine a reference log index of a leader storage node based on the current data operation state, wherein the reference log index is a recently stored log index when the leader storage node is in the RW state, and the leader storage node and the follower storage node are in a same data operation state;
an index acquisition module, configured to acquire a synchronized log index stored in the follower storage node, wherein the synchronized log index is obtained by synchronizing a log index stored in the leader storage node;
a data acquisition module, configured to locally acquire data requested by the data read request from the follower storage node when the synchronized log index covers the reference log index; and
a feedback module, configured to feed back the data to the terminal.

15. An apparatus for data processing, located in a leader storage node, the apparatus comprising:
a write request receiving module, configured to acquire a reference log index of the leader storage node when the leader storage node in a read-only (RO) state receives a data write request from a terminal, wherein the reference log index is a recently stored log index when the leader storage node is in a read-write (RW) state;
a transmitting module, configured to generate a state change request comprising the reference log index, and transmit the state change request to a follower storage node;
a change module, configured to change from the RO state to the RW state based on a response result fed back by the follower storage node for the state change request;
a storage module, configured to write data indicated by the data write request, and generate a log index of the data; and
a synchronization module, configured to synchronize the data and the log index to the follower storage node.

16. A computer device, comprising a memory and a processor, the memory having a computer program stored therein, and the processor, when executing the computer program, implementing the method according to any one of claims 1 to 13.

17. A computer-readable storage medium, having a computer program stored therein, the computer program, when executed by a processor, implementing the method according to any one of claims 1 to 13.

18. A computer program product, comprising a computer program which, when executed by a processor, implements the method according to any one of claims 1 to 13.
